# FASCICULE DE BREVET EUROPEEN

(11) **EP 3 640 019 B1**
(45) Date de publication et mention de la délivrance du brevet: **08.12.2021**
(21) Numéro de dépôt: 19202522.9
(22) Date de dépôt: 10.10.2019
(51) Int. Cl.: B32B 5/02, B32B 5/26, B32B 7/12

(54) **STRATIFIÉ DE LAINE DE VERRE**
SCHICHTMATERIAL AUS GLASWOLLE
GLASS WOOL LAMINATE

(30) Priorité: 15.10.2018 FR 1871177
(43) Date de publication de la demande: 22.04.2020
(73) Titulaire: Saint-Gobain Ecophon AB, 265 75 Hyllinge (SE)
(72) Inventeur: GARNIER, Louis, 75012 Paris (FR); MARCHEAU, Doris, 75015 Paris (FR)
(74) Mandataire: Saint-Gobain Recherche

(56) Documents cités:
- WO-A1-2013/014399
- WO-A1-2017/162955
- CH-A5- 624 652

## Description

L'invention concerne un stratifié formé d'un panneau de laine minérale contrecollé avec un voile non-tissé de fibres minérales textiles ayant une raideur en traction d'au moins 30 N/mm. Elle concerne également un procédé de fabrication d'un tel stratifié par contrecollage dudit voile non-tissé sur un panneau de laine minérale. Le brevet WO 2017/162955A1, décrit un stratifié similaire mais ne comportant pas la caractéristique de raideur à la traction du voile.

La fabrication de produits d'isolation à base de laine minérale comprend généralement une étape de fabrication des fibres de verre ou de roche par un procédé de centrifugation. Sur leur trajet entre le dispositif de centrifugation et le tapis de collecte des fibres, on vaporise sur les fibres encore chaudes une composition aqueuse de liant qui subit ensuite une réaction de thermodurcissement à des températures d'environ 200 °C.

Les résines thermodurcissables à base de phénol et de formaldéhyde, utilisées pendant plusieurs dizaines d'années en tant que liants, sont remplacées de plus en plus par des produits issus de sources renouvelables et n'émettant pas, ou très peu, de formaldéhyde, composé considéré comme pouvant nuire à la santé humaine.

Les ingrédients réactifs biosourcés et renouvelables à court terme les plus utilisés dans le domaine des liants exempts de formaldéhyde sont les hydrates de carbone, également appelés saccharides.

Les monosaccharides, oligosaccharides et polysaccharides comportent une multitude de groupes hydroxyle et peuvent réagir avec des acides polycarboxyliques pour former des polyesters thermodurcis, insolubles et infusibles.

La société Saint-Gobain Isover a proposé récemment le remplacement partiel ou total des sucres, réducteurs ou non-réducteurs, utilisés dans les liants pour laine minérale, par des sucres hydrogénés, également appelés alcools de sucres ou alditols (voir par exemple WO10/029266, WO2013/014399, WO2013/021112, WO2015/132518, WO2015/159012). Ces réactifs ont une stabilité thermique considérablement plus élevée que les sucres réducteurs et ne donnent pas lieu aux réactions de Maillard et/ou de caramélisation. Ils permettent de ce fait d'obtenir des produits de couleur plus claire.

Les produits d'isolation à base de laine minérale et de cette nouvelle génération de liants « verts », sont toutefois relativement hygroscopiques et conservent moins bien leurs propriétés mécaniques au cours du temps que les produits plus colorés fabriqués avec des sucres réducteurs.

Pour compenser la perte des propriétés mécaniques après une certaine période de vieillissement de ces produits d'isolation, il peut être nécessaire d'augmenter la proportion de liant d'environ 10 à 20 %, ce qui augmente non seulement le coût du produit final mais altère également sa réaction au feu.

Une des propriétés mécaniques particulièrement importantes pour le confort de pose de panneaux semi-rigides de laine minérale est leur rigidité. Ces panneaux semi-rigides, d'une masse volumique d'au plus environ 40 kg/m³, sont en effet utilisés pour l'isolation de murs verticaux ou de combles où ils sont appliqués entre les chevrons. Lors de l'installation la partie supérieure du panneau ne doit pas s'abattre sur l'installateur.

Les panneaux de laine minérale semi-ridiges sont en général stockés, transportés et commercialisés sous forme de rouleaux, les produits étant comprimés avec des taux de compression allant jusqu'à 4. L'enroulement et la compression génèrent des contraintes sévères qui peuvent durer plusieurs mois avant déballage, décompression et installation par l'utilisateur final.

Afin de garantir une rigidité suffisante lors de l'installation, même au bout de plusieurs mois de vieillissement, il a été envisagé d'augmenter la masse volumique des panneaux, ce qui entraîne bien entendu un surcoût de production.

L'idée à la base de la présente invention a été de renforcer la rigidité - c'est-à-dire la raideur en *flexion* - de panneaux semi-rigides de laine minérale par contre-collage d'un surfaçage présentant une raideur élevée *en traction* sur la face du panneau qui, lors de l'installation, fera face au mur, à la paroi ou au toit en pente à isoler. En effet, lors de l'installation du panneau en position verticale ou oblique, la partie supérieure du panneau subira une contrainte de fléchissement qui se traduit immédiatement par une contrainte en traction du surfaçage. Le surfaçage comprend ou est formé d'un voile non-tissé de fibres minérales textiles, de préférence de fibres de verre textiles, liées par un liant organique.

La présente invention a plus particulièrement pour objet un stratifié comportant
- un panneau de laine minérale dont les fibres sont liées par un premier liant organique, présentant une masse volumique inférieure ou égale à 40 kg/m³ et
- un surfaçage comprenant un voile non-tissé de fibres minérales textiles liées par un deuxième liant organique, collé sur au moins une des deux faces principales du panneau de laine minérale,
caractérisé par le fait que la raideur en traction du voile non-tissé est supérieure à 30 N/mm.

Le stratifié de l'invention contient donc un premier liant organique qui lie entre elles les fibres de laine minérale, et un deuxième liant organique qui lie entre elles les fibres du voile non-tissé.

Comme expliqué en introduction, le contre-collage du surfaçage permet de stabiliser la rigidité du panneau de laine de verre due au vieillissement du premier liant organique. Il peut également servir à rigidifier un panneau de laine de verre qui, dès sa fabrication, présente une rigidité insuffisante par exemple à cause d'une faible masse volumique ou d'un taux de liant particulièrement bas.

Le premier liant organique est généralement un liant polymère sensible au vieillissement dans les conditions de stockage du stratifié.

Dans un mode de réalisation particulier c'est un polyester réticulé formé par estérification de sucres et/ou de sucres hydrogénés, et d'au moins un acide polycarboxylique, de préférence d'acide citrique, en présence d'un catalyseur, de préférence de l'hypophosphite de sodium. Des liants organiques de ce type sont décrits par exemple dans les demandes WO10/029266, WO2013/014399, WO2013/021112, WO2015/132518, WO2015/159012.

Les sucres utilisés pour la formation de ces polyesters réticulés peuvent être des sucres réducteurs (aldoses et cétoses), par exemple des monosaccharides tels que le glucose, le galactose, le mannose et le fructose, des disacharides tels que le lactose, le maltose, l'isomaltose et le cellobiose, et les hydrolysats d'amidon ou de matières ligno-cellulosiques décrits ci-dessus. On utilisera de préférence le glucose et le fructose, en particulier le glucose.

Il peut s'agir également de sucres non-réducteurs, généralement des diholosides tels que le tréhalose, les isotréhaloses, le saccharose et les isosaccharoses. Le saccharose est particulièrement préféré.

Dans un mode de réalisation particulièrement préféré, le polyester réticulé est obtenu à partir de compositions de liant contenant une fraction significative d'au moins un sucre hydrogéné. Ce sont en effet ces sucres hydrogénés, également appelés alcools de sucres ou alditols, qui confèrent au panneau de laine minérale un caractère hydrophile le rendent sensible au vieillissement.

Les sucres hydrogénés représentent de préférence au moins 25 % en poids, en particulier au moins 50 % en poids et encore plus préférentiellement de 70 à 100 % en poids de l'ensemble des sucres réducteurs, sucres non-réducteurs et sucres hydrogénés.

On peut citer à titre d'exemples de sucres hydrogénés ceux choisis dans le groupe constitué de l'érythritol, l'arabitol, le xylitol, le sorbitol, le mannitol, l'iditol, le maltitol, l'isomaltitol, le lactitol, le cellobitol, le palatinitol, le maltotritol, et les produits d'hydrogénation d'hydrolysats d'amidon ou d'hydrolysats de matières ligno-cellulosiques, notamment d'hémicellulose, en particulier de xylanes et xyloglucanes.

Les sucres hydrogénés sont de préférence choisis dans le groupe constitué de xylitol, maltitol, sorbitol et produits d'hydrogénation d'hydrolysats d'amidon ou de matières ligno-cellulosiques.

Le problème technique résolu par l'invention, à savoir la dégradation des propriétés mécaniques en cours de vieillissement et en particulier la perte de rigidité, se pose avant tout pour des produits d'isolation dits « légers », à faible masse volumique. Les panneaux de laine minérale de la présente invention ont donc avantageusement une masse volumique comprise entre 8 et 40 kg/m³, de préférence entre 10 et 30 kg/m³, et en particulier entre 12 et 25 kg/m³. Au-delà de 40 kg/m³ les produits présentent, même après vieillissement dans des conditions humides et/ou à l'état comprimé, une rigidité suffisante pour permettre une installation aisée, sans que le produit ne se plie ou se rabatte sur l'installateur.

L'épaisseur des panneaux, déterminée conformément à la norme NF EN 823 (Produits isolant thermiques destinés aux applications du bâtiment - détermination de l'épaisseur) est avantageusement comprise entre 20 mm et 500 mm, de préférence entre 30 mm et 400 mm et en particulier entre 40 mm et 300 mm.

Le voile non-tissé de fibres minérales textiles utilisé dans la présente invention pour améliorer la rigidité des panneaux de laine minérale présente avantageusement un grammage (poids par unité de surface) compris entre 20 g/m² et 80 g/m², de préférence entre 25 g/m² et 70 g/m², en particulier entre 30 g/m² et 60 g/m² et idéalement entre 35 g/m² et 50 g/m².

Sa teneur en liant organique (deuxième liant organique), déterminée par la perte au feu (LOI, de l'anglais *loss on ignition*) du voile non-tissé est généralement comprise entre 10 et 30 %, de préférence entre 15 et 25 %, et plus préférentiellement entre 17 et 22%.

Le deuxième liant organique, qui lie entre elles les fibres minérales du voile non-tissé, ne doit en particulier pas être à base d'un élastomère tel qu'un caoutchouc styrène-butadiène (SBR), que l'on rencontre comme liant pour des voiles non-tissés. Un tel élastomère présente en effet un faible module d'élasticité et un allongement à la rupture important et ne permet pas de conférer au voile non-tissé la raideur en traction requise.

Le deuxième liant organique est de préférence un liant thermodurci présentant une température de transition vitreuse (Tg) supérieure à 25 °C, en particulier supérieure à 50 °C.

Le premier liant du panneau de laine minérale et le deuxième liant du voile non-tissé sont avantageusement exempts de formaldéhyde.

Le deuxième liant est avantageusement de même nature chimique que le premier liant, c'est-à-dire il s'agit avantageusement d'un liant polyester formé par estérification de sucres et/ou de sucres hydrogénés, et d'au moins un acide polycarboxylique, de préférence d'acide citrique, en présence d'un catalyseur, de préférence de l'hypophosphite de sodium, tels que ceux décrits dans les demandes WO10/029266, WO2013/014399, WO2013/021112, WO2015/132518, WO2015/159012.

Le surfaçage formé par le voile non-tissé est de préférence collé sur une seule des deux faces principales du panneau de laine minérale. Il est possible de le coller sur les deux faces du panneau, mais cela augmente sensiblement le coût du produit final sans améliorer significativement sa rigidité.

Le contrecollage du surfaçage sur le panneau de laine minérale est réalisé avantageusement en cours de fabrication du panneau de laine minérale. Le voile non-tissé est simplement appliqué sur ou sous le matelas de laine minérale encollée du liant non-durci et l'ensemble est ensuite introduit dans l'étuve où a lieu le durcissement du premier liant du panneau de laine minérale.

Du fait de ce mode de fabrication le surfaçage est directement en contact avec le panneau de laine minérale, l'adhésion du surfaçage au panneau de laine minérale étant assurée de préférence par le premier liant organique. Il peut être avantageux de pulvériser sur le voile non-tissé ou sur une face du matelas de laine minérale encollée par le liant non-durci une composition aqueuse de liant similaire ou identique à celle appliquée sur les fibres de laine minérale avant formation du matelas.

Le deuxième liant organique liant les fibres du voile non-tissé formant le surfaçage est de préférence durci avant d'être appliqué sur ou sous le matelas de laine minérale encollée par le premier liant organique non-durci.

La présente invention a donc également pour objet un procédé de fabrication d'un stratifié tel que décrit ci-avant, comprenant les étapes successives suivantes :
(a) la formation d'un matelas de laine minérale dont les fibres sont revêtues d'une composition aqueuse de liant contenant des ingrédients réactifs apte à former, par durcissement à chaud, un premier liant organique,
(b) l'application, sur une des faces du matelas de laine minérale, d'un voile non-tissé de fibres minérales textiles liées par un deuxième liant organique,
(c) le traitement thermique de l'ensemble à une température et pendant une durée suffisante pour faire réagir les ingrédients réactifs de la composition aqueuse de liant de manière à former un premier liant organique infusible.

Comme décrit précédemment les ingrédients réactifs de la composition aqueuse de liant contiennent des sucres et/ou des sucres hydrogénés et au moins un acide polycarboxylique, et de préférence un catalyseur d'estérification tel que l'hypophosphite de sodium.

Les sucres hydrogénés représentent avantageusement au moins 25 %, de préférence au moins 50 %, plus préférentiellement de 70 % à 100 %, du poids total des sucres et sucres hydrogénés.

Dans un mode de réalisation avantageux, on pulvérise, préalablement à l'étape (b), sur la face du voile non-tissé qui vient au contact du matelas de laine minérale, une composition aqueuse de liant thermodurcissable, contenant de préférence les mêmes ingrédients réactifs que la composition aqueuse de liant dont sont revêtues les fibres du matelas de laine minérale.

Le traitement thermique de l'étape (c) est mis en œuvre à une température comprise entre 200 et 240°C, de préférence dans une étuve ventilée utilisée communément dans des installations de fabrication de laine minérale. Le temps de séjour dans l'étuve de l'ensemble matelas de laine minérale / surfaçage est généralement compris entre 5 et 15 minutes.

### Exemple

Afin de montrer l'importance de la raideur en traction du voile pour l'obtention d'un produit final rigide, les inventeurs ont appliqué deux types de voiles non-tissés en fibres de verre sur des matelas de laine minérale encollées d'une composition de liant à base de sucre hydrogéné, d'acide citrique et de d'hypophosphite de sodium.

Le premier voile (A) selon l'invention est un voile non-tissé présentant une teneur en liant (perte au feu, LOI) de 19 %. Ce voile est lié par un liant obtenu à partir d'une composition aqueuse de liant ayant la même composition (en matières sèches) que celle utilisée à encoller le matelas de laine minérale. Le voile non-tissé (A) présente une masse surfacique de 40 g/m².

Le deuxième voile (B) comparatif est un voile non-tissé présentant une teneur en liant (perte au feu, LOI) de 22 %. Ce voile est lié par un liant à base de SBR et de polymère acrylique (50/50). Sa masse surfacique est également de 40 g/m².

La raideur des deux voiles est déterminée par des essais en traction au moyen d'un banc MTS Insider à 23 °C, sur des échantillons de 300mm x 50mm, préalablement conditionnés dans une atmosphère de 50 % d'humidité relative. La vitesse de traction est de 100 mm/minute. La raideur est la pente de la courbe Force = f(déplacement) entre les points de déplacement à 0,1 mm et 0,5 mm. Elle est exprimée en Newton (N) par millimètre (mm). Chaque mesure est effectuée sur 10 échantillons.

Dans ces conditions on mesure une raideur de 40,5 ± 10 N/mm pour le voile (A) selon l'invention et raideur de 19,5 ± 4 N/mm pour le voile comparatif (B).

Les mesures de rigidité en flexion des panneaux de laine minérale contrecollés des surfaçages décrits ci-dessus ont été réalisées avant et après réalisation d'un traitement de vieillissement accéléré, appelé « test Florida ». Le test Florida comporte 21 cycles thermiques identiques de 8 h chacun, au cours desquels la température varie de 25 à 55 °C et l'humidité relative de 18 % à 98 % (21 cycles de 8 h réalisés en 7 jours). Le tableau 1 ci-dessous montre les conditions de température et d'humidité relative pour chaque cycle en fonction du temps. Les variations de température et d'humidité relative (HR) sont opérées à vitesse constante.

**[Tableaux 1]**

| étape | Temps (h) | Température (°C) | HR (%) |
|---|---|---|---|
| 1 | 0-1,5 | 25-55 | 80 - 95 |
| 2 | 1,5-4,0 | 55 | 95-35 |
| 3 | 4,0 - 6,0 | 55 | 35-20 |
| 4 | 6,0 - 8,0 | 55-25 | 20-80 |

Les panneaux sont comprimés à un taux de compression de 4,9 pendant toute la durée du test Florida.

La résistance à la flexion des différents panneaux (sans surfaçage, avec surfaçage (A) selon l'invention, avec surfaçage (B) comparatif) est déterminée par mesure des flèches en bout de table.

Les produits testés ont une longueur de 1200 mm et une largeur de 600 mm.

Les produits sont posés, avant le test Florida, sur une table de manière à ce qu'une de leurs extrémités dépasse le bord de la table de 600 mm ou de 750 mm (longueur libre), puis une plaque (500 mm x 500 mm, 2765 g) est posée sur l'échantillon de manière à ce que le bord de la plaque soit superposée au bord de la table. Lorsque le panneau comporte un surfaçage contrecollé, celui-ci est sur la face supérieure du panneau.

La flèche à 600 mm ou 750 mm est la distance entre le bord inférieur du panneau (mesurée au centre de la largeur du panneau) et l'horizontale (plan de la table), mesurée à une distance de 600 mm et 750 mm respectivement du bord de la table. Pour chaque voile, 8 panneaux ont été soumis aux mesures de flèches en bout de table, les flèches étant mesurées de chaque côté du panneau (16 mesures au total).

Après le test Florida on répète la mesure de flèche pour chaque échantillon mais avec une longueur libre de 600 mm et 450 mm.

Les résultats sont présentés dans le Tableau 2 ci-dessous.

**[Tableaux2]**

| | | Flèche avant test Florida | | Flèche après test Florida | |
|---|---|---|---|---|---|
| | Raideur du voile | mesurée à 600 mm | mesurée à 750 mm | mesurée à 450 mm | mesurée à 600 mm |
| Sans surfaçage | - | 6 ± 2 cm | 17 ± 8 cm | 9 ± 3 cm | 35 ± 6 cm |
| Voile (A) | 40,5 ± 10 N/ mm | 4 ± 2 cm | 10 ± 3 cm | 3 ± 4 cm | 21 ± 7 cm |
| Voile (B) | 19,5 ± 4 N/mm | 4 ± 1 cm | 14 ± 4 cm | 4 ± 1 cm | 31 ± 8 cm |

Avant le test Florida, on observe une moindre flèche (moyenne) pour les deux produits avec surfaçage. La différence entre le surfaçage à raideur élevée (> 30 N/mm) et celui à faible raideur n'est toutefois pas significative compte tenu de l'erreur expérimentale.

En revanche, après le test Florida, l'échantillon selon l'invention comportant le voile non-tissé avec une raideur en traction supérieur à 30 N/mm, présente une flèche à 600 mm significativement inférieure à celle du stratifié comportant un surfaçage avec une raideur en traction inférieure à 30 N/mm (voile comparatif).

## Revendications

1. Stratifié comportant
- un panneau de laine minérale dont les fibres sont liées par un premier liant organique, présentant une masse volumique inférieure ou égale à 40 kg/m³ et
- un surfaçage comprenant un voile non-tissé de fibres minérales textiles liées par un deuxième liant organique, collé sur au moins une des deux faces principales du panneau de laine minérale,
**caractérisé par le fait que** la raideur en traction du voile non-tissé est supérieure à 30 N/mm.

2. Stratifié selon la revendication 1, **caractérisé par le fait que** la masse volumique du panneau de laine minérale est comprise entre 8 et 40 kg/m ³, de préférence entre 10 et 30 kg/m³, en particulier entre 12 et 25 kg/m³.

3. Stratifié selon la revendication 1 ou 2, **caractérisé par le fait que** le panneau de laine minérale a une épaisseur comprise entre 20 et 500 mm, de préférence entre 30 et 400 mm.

4. Stratifié selon l'une quelconque des revendications précédentes, **caractérisé par le fait que** le surfaçage est collé sur une seule des deux faces principales du panneau de laine minérale.

5. Stratifié selon l'une quelconque des revendications précédentes, **caractérisé par le fait que** le voile non-tissé présente un grammage compris entre 20 g/m² et 80 g/m², de préférence entre 25 g/m² et 70 g/m², en particulier entre 30 g/m² et 60 g/m² et idéalement entre 35 g/m² et 50 g/m².

6. Stratifié selon l'une quelconque des revendications précédentes, **caractérisé par le fait que** la perte au feu (LOI) du voile non-tissé est comprise entre 10 et 30 %, de préférence entre 15 et 25 %, et plus préférentiellement entre 17 et 22 %.

7. Stratifié selon l'une quelconque des revendications précédentes, **caractérisé par le fait que** le premier liant organique est un polyester formé par estérification de sucres et/ou de sucres hydrogénés, et d'au moins un acide polycarboxylique.

8. Stratifié selon l'une quelconque des revendications précédentes, **caractérisé par le fait que** le deuxième liant organique est un liant thermodurci présentant une température de transition vitreuse (Tg) supérieure à 25 °C.

9. Stratifié selon l'une quelconque des revendications précédentes, **caractérisé par le fait que** le premier liant et le deuxième liant sont exempts de formaldéhyde.

10. Stratifié selon l'une quelconque des revendications précédentes, **caractérisé par le fait que** le surfaçage est directement en contact avec le panneau de laine minérale, l'adhésion du surfaçage au panneau de laine minérale étant assurée de préférence par le premier liant organique.

11. Procédé de fabrication d'un stratifié selon l'une quelconque des revendications précédentes, comprenant les étapes successives suivantes :
(a) la formation d'un matelas de laine minérale dont les fibres sont revêtues d'une composition aqueuse de liant contenant des ingrédients réactifs apte à former, par durcissement à chaud, un premier liant organique,
(b) l'application, sur une des faces du matelas de laine minérale, d'un voile non-tissé de fibres minérales textiles liées par un deuxième liant organique,
(c) le traitement thermique de l'ensemble à une température et pendant une durée suffisante pour faire réagir les ingrédients réactifs de la composition aqueuse de liant de manière à former un premier liant organique infusible.

12. Procédé selon la revendication 11, **caractérisé par le fait que** les ingrédients réactifs de la composition aqueuse de liant contiennent des sucres, et/ou des sucres hydrogénés et au moins un acide polycarboxylique.

13. Procédé selon la revendication 11 ou 12, **caractérisé par le fait que** les sucres hydrogénés représentent au moins 25 %, de préférence au moins 50 %, plus préférentiellement de 70 % à 100 %, du poids total des sucres et sucres hydrogénés.

14. Procédé selon l'une des revendications 11 à 13, **caractérisé par le fait que** l'on pulvérise, préalablement à l'étape (b), sur la face du voile non-tissé qui vient au contact du matelas de de laine minérale, une composition aqueuse de liant thermodurcissable, contenant de préférence les mêmes ingrédients réactifs que la composition aqueuse de liant dont sont revêtues les fibres du matelas de laine minérale.

## Patentansprüche

1. Schichtstoff, umfassend
- eine Mineralwollplatte, deren Fasern durch ein erstes organisches Bindemittel gebunden sind, die eine Dichte geringer als oder gleich 40 kg/m³ aufweist und
- ein Verkleidungsmaterial, umfassend eine Vliesstoffbahn aus textilen Mineralfasern, die durch ein zweites organisches Bindemittel gebunden sind, das auf mindestens eine der beiden Hauptflächen der Mineralwollplatte geklebt ist,
**dadurch gekennzeichnet, dass** die Zugsteifigkeit der Vliesstoffbahn größer als 30 N/mm ist.

2. Schichtstoff nach Anspruch 1, **dadurch gekennzeichnet, dass** die Dichte der Mineralwollplatte zwischen 8 und 40 kg/m³, vorzugsweise zwischen 10 und 30 kg/m³, insbesondere zwischen 12 und 25 kg/m³, liegt.

3. Schichtstoff nach Anspruch 1 oder 2, **dadurch gekennzeichnet, dass** die Mineralwollplatte eine Dicke zwischen 20 und 500 mm, vorzugsweise zwischen 30 und 400 mm, aufweist.

4. Schichtstoff nach einem der vorstehenden Ansprüche, **dadurch gekennzeichnet, dass** das Verkleidungsmaterial nur auf eine der beiden Hauptflächen der Mineralwollplatte geklebt ist.

5. Schichtstoff nach einem der vorstehenden Ansprüche, **dadurch gekennzeichnet, dass** die Vliesstoffbahn ein Flächengewicht zwischen 20 g/m² und 80 g/m², vorzugsweise zwischen 25 g/m² und 70 g/m², insbesondere zwischen 30 g/m² und 60 g/m² und idealerweise zwischen 35 g/m² und 50 g/m² aufweist.

6. Schichtstoff nach einem der vorstehenden Ansprüche, **dadurch gekennzeichnet, dass** der Glühverlust (LOI) der Vliesstoffbahn zwischen 10 und 30 %, vorzugsweise zwischen 15 und 25 % und mehr bevorzugt zwischen 17 und 22 % liegt.

7. Schichtstoff nach einem der vorstehenden Ansprüche, **dadurch gekennzeichnet, dass** das erste organische Bindemittel ein Polyester ist, der durch Veresterung von Zuckern und/oder hydrierten Zuckern und mindestens einer Polycarbonsäure gebildet ist.

8. Schichtstoff nach einem der vorstehenden Ansprüche, **dadurch gekennzeichnet, dass** das zweite organische Bindemittel ein wärmegehärtetet Bindemittel ist, das eine Glasübergangstemperatur (Tg) größer als 25 °C aufweist.

9. Schichtstoff nach einem der vorstehenden Ansprüche, **dadurch gekennzeichnet, dass** das erste Bindemittel und das zweite Bindemittel frei von Formaldehyd sind.

10. Schichtstoff nach einem der vorstehenden Ansprüche, **dadurch gekennzeichnet, dass** das Verkleidungsmaterial in direktem Kontakt mit der Mineralwollplatte vorliegt, wobei die Haftung des Verkleidungsmaterials an der Mineralwollplatte vorzugsweise durch das erste organische Bindemittel erfolgt.

11. Verfahren zur Herstellung eines Schichtstoffs nach einem der vorstehenden Ansprüche, umfassend folgende aufeinanderfolgende Schritte:
(a) die Bildung einer Mineralwollmatte, deren Fasern mit einer wässrigen Bindemittelzusammensetzung beschichtet sind, die reaktive Bestandteile enthält, die in der Lage sind, durch Wärmehärten ein erstes organisches Bindemittel zu bilden,
(b) das Aufbringen einer Vliesstoffbahn aus textilen Mineralfasern, die durch ein zweites organisches Bindemittel gebunden sind, auf eine der Flächen der Mineralwollmatte,
(c) die Wärmebehandlung des Ganzen bei einer Temperatur und während einer Dauer, die ausreichen, um die reaktiven Bestandteile der wässrigen Bindemittelzusammensetzung auf eine Weise umzusetzen, um ein erstes unschmelzbares organisches Bindemittel zu bilden.

12. Verfahren nach Anspruch 11, **dadurch gekennzeichnet, dass** die reaktiven Bestandteile der wässrigen Bindemittelzusammensetzung Zucker und/oder hydrierte Zucker und mindestens eine Polycarbonsäure enthalten.

13. Verfahren nach Anspruch 11 oder 12, **dadurch gekennzeichnet, dass** die hydrierten Zucker mindestens 25 %, vorzugsweise mindestens 50 %, mehr bevorzugt 70 % bis 100 %, des Gesamtgewichts der Zucker und hydrierten Zucker ausmachen.

14. Verfahren nach einem der Ansprüche 11 bis 13, **dadurch gekennzeichnet, dass** vor Schritt (b) eine wässrige wärmehärtende Bindemittelzusammensetzung auf die Fläche der Vliesstoffbahn, die mit der Mineralwollmatte in Kontakt kommt, aufgesprüht wird, die vorzugsweise die gleichen reaktiven Bestandteile enthält wie die wässrige Bindemittelzusammensetzung, mit der die Fasern der Mineralwollmatte beschichtet sind.

## Claims

1. A laminate including
- a mineral wool panel whose fibers are bonded by a first organic binder having a density less than or equal to 40 kg/m³ and
- a facing comprising a nonwoven fiber web of textile mineral fibers bonded by a second organic binder, laminated on at least one of the two main faces of the mineral wool panel,
**characterized by the fact that** the tensile stiffness of the nonwoven fiber web is greater than 30 N/mm.

2. The laminate according to claim 1, **characterized by the fact that** the density of the mineral wool panel is comprised between 8 and 40 kg/m³, preferably between 10 and 30 kg/m³, particularly between 12 and 25 kg/m³.

3. The laminate according to claim 1 or 2, **characterized by the fact that** the mineral wool panel has a thickness comprised between 20 and 500 mm, preferably between 30 and 400 mm.

4. The laminate according to any one of the preceding claims, **characterized by the fact that** the facing is laminated on one of the two main faces of the mineral wool panel.

5. The laminate according to any one of the preceding claims, **characterized by the fact that** the nonwoven fiber web has a grammage comprised between 20 g/m² and 80 g/m², preferably between 25 g/m² and 70 g/m², particularly between 30 g/m² and 60 g/m² and ideally between 35 g/m² and 50 g/m².

6. The laminate according to any one of the preceding claims, **characterized by the fact that** the loss on ignition (LOI) of the nonwoven fiber web is comprised between 10 and 30%, preferably between 15 and 25%, and more preferably between 17 and 22%.

7. The laminate according to any one of the preceding claims, **characterized by the fact that** the first organic binder is a polyester formed by the esterification of sugars and/or hydrogenated sugars, and of at least one polycarboxylic acid.

8. The laminate according to any one of the preceding claims, **characterized by the fact that** the second organic binder is a thermoset binder having a glass transition temperature (Tg) greater than 25°C.

9. The laminate according to any one of the preceding claims, **characterized by the fact that** the first binder and the second binder are formaldehyde-free.

10. The laminate according to any one of the preceding claims, **characterized by the fact that** the facing is directly in contact with the mineral wool panel, the facing preferably being adhered to the mineral wool panel by the first organic binder.

11. A method for the manufacture of a laminate according to any one of the preceding claims, comprising the following successive steps:
(a) the formation of a mineral wool mat whose fibers are coated with an aqueous binder composition containing reactive ingredients that can form, by thermosetting, a first organic binder,
(b) the application, onto one of the faces of the mineral wool mat, of a nonwoven fiber web of textile mineral fibers bonded by a second organic binder,
(c) the heat treatment of the ensemble at a high enough temperature and for long enough to make the aqueous binder composition's reactive ingredients react to form a first infusible organic binder.

12. The method according to claim 11, **characterized by the fact that** the aqueous binder composition's reactive ingredients contain sugars, and/or hydrogenated sugars and at least one polycarboxylic acid.

13. The method according to claim 11 or 12, **characterized by the fact that** the hydrogenated sugars represent at least 25%, preferably at least 50%, more preferably from 70% to 100%, of the total weight of the sugars and hydrogenated sugars.

14. The method according to one of claims 11 to 13, **characterized by the fact that** an aqueous composition of thermosetting binder, containing preferably the same reactive ingredients as the aqueous binder composition that coats the fibers of the mineral wool mat, is sprayed onto the surface of the nonwoven fiber web that comes into contact with the mineral wool mat prior to step (b).
